# EUROPÄISCHE PATENTSCHRIFT

(11) **EP 0 928 249 B1**
(45) Veröffentlichungstag und Bekanntmachung des Hinweises auf die Patenterteilung: **20.02.2002**
(21) Anmeldenummer: 97942945.3
(22) Anmeldetag: 17.09.1997
(51) Int. Cl.: B60B 3/14

(54) **SPIELFREIE RADBEFESTIGUNG**
PLAY-ELIMINATING WHEEL FITTING
SYSTEME DE FIXATION DE ROUE SANS JEU

(30) Priorität: 26.09.1996 DE 19639729
(43) Veröffentlichungstag der Anmeldung: 14.07.1999
(73) Patentinhaber: Weiss, Wolfgang, 85521 Ottobrunn (DE)
(72) Erfinder: Weiss, Wolfgang, 85521 Ottobrunn (DE)
(74) Vertreter: DIEHL GLAESER HILTL & PARTNER
(86) Internationale Anmeldenummer: EP9705103
(87) Internationale Veröffentlichungsnummer: WO9813220

(56) Entgegenhaltungen:
- DE-U- 9 313 244
- FR-A- 536 941
- US-A- 1 901 078
- US-A- 3 154 348
- US-A- 5 211 448
- US-A- 5 584 537

## Beschreibung

Die Erfindung betrifft eine Radbefestigung für Fahrzeuge mit einer den Reifen tragenden Felge, welche mittels axial wirkender Vorspannmittel mit einer im Radträger drehbar gelagerten, eine Radaufnahme aufweisenden Welle verbindbar ist und Mittel zur formschlüssigen Drehmoment und Schubkraftübertragung aufweist, wobei das drehmoment- und schubkraftübertragende Mittel durch eine an Felge und Radaufnahme angebrachte, unter vollständiger Aufnahme der Vorspannkraft formschlüssig und spielfrei in Eingriff bringbare, die Felge zentrierende, Profilierung gebildet ist.

Bei Kraftfahrzeugen sind üblicherweise die Räder, d.h. deren Felgen mit einer Radaufnahme seitens der drehbaren Welle bzw. Radachse mittels einer Verschraubung lösbar verbunden.

Es sind Befestigungen bekannt, die durch mehrere an der Radaufnahme auf einem gemeinsamen Teilkreis angeordnete Schrauben gebildet sind, welche entsprechende Bohrungen in den Felgen durchgreifen. Die radiale Zentrierung der Felge zur Radaufnahme erfolgt hier durch einen Bund an der Radaufnahme und die umlaufende Zentrierung durch die konischen Bereiche der Befestigungsschrauben oder Muttern, welche mit entsprechenden konisch ausgestalteten Gegenflächen an den Durchgangsbohrungen in der Felge zusammenwirken.

Die zu übertragenden Drehmomente werden, neben dem durch die Flächenpressung erzeugten Kraftschluß über die konischen Bereiche der Schrauben bzw. Muttern formschlüssig von der Felge auf die Schrauben und in weiterer Folge auf die Radaufnahme übertragen.

Nachteilig bei dieser Anordnung ist die Vielzahl der Befestigungselemente (Stiftschrauben mit Muttern oder Schrauben) und die durch die Anzahl der Befestigungspunkte exakt vorgegebenen möglichen Montagepositionen (große Montagewinkel), was einer schnellen und einfachen Handhabung, insbesonders im Bereich des Rennsports entgegensteht.

Insbesonders im Bereich des Rundstrecken-Rennsports kommen Radbefestigungen zum Einsatz, deren Radaufnahmen einen zentralen Gewindebolzen als Befestigungselement aufweisen. Das Rad wird demnach durch eine zentrale Mutter mit der Radaufnahme verbunden.
Zur Übertragung des Drehmomentes sind in der Radaufnahme oder der Felge axial abstehende, auf einem gemeinsamen Teilkreis angeordnete, Übertragungsstifte vorgesehen, welche in entsprechende Öffnungen der Felge oder der Radaufnahme formschlüssig eingreifen. Naturgemäß sind hierbei durch die Anzahl der Übertragungsstifte definierte Montagewinkel des Rades an der Radaufnahme gegeben, was der Einfachheit der Handhabung, und letztlich auch einem möglichst geringen Zeitaufwand - die mögliche Verbindungsposition muß jeweils erst gefunden werden - entgegensteht. Um ein leichtes und schnelles Aufschieben des Rades auf die Übertragungsstifte zu ermöglichen, müssen diese bezüglich ihrer Aufnahmebohrungen in der Felge bzw. in der Radaufnahme eine gewisse Freigängigkeit aufweisen. Diese Freigängigkeit bewirkt ein Spiel in der Drehmomentübertragung, was bei Wechselbelastung, beispielsweise bei einer sowohl angetriebenen als auch gebremsten Achse, zu ständigem Verdrehen führt. Dadurch können die Übertragungsstifte die Aufnahmebohrungen bei der vorzugsweisen Verwendung von Leichtmetallen, d.h. weicheren Materialien, schnell ausleiben.

Der durch die Wechselbelastung hervorgerufenen Relativbewegung zwischen Felge und Radaufnahme kann nur bedingt und dann nur bei nicht unerheblichen Anzugmoment der Zentralmutter durch Kraftschluß zwischen den aneinanderliegenden Planflächen der Felge und der Radaufnahme entgegengewirkt werden. Zudem muß bei diesem Lösungsvorschlag bzw. bei auftretender Relativbewegung von Felge und Radaufnahme die Befestigungsmutter gegen Lösen im besonderem Maße gesichert werden, was einen weiteren Aufwand bedeutet.

Es ist auch bekannt, die Felge mit Keilnuten zu versehen, welche mit der als Kellwelle ausgebildeten Radaufnahme in drehmomentübertragender Weise zusammenwirkt. Die Nachteile dieser Lösung sind ähnlich wie bei dem zuvor beschriebenen Beispiel; nämlich kann die Felge nur in den durch die Anzahl der Keile/Keilnuten definierten Winkellagen aufgeschoben werden. Um das Aufschieben der Felge auf den Befestigungsbolzen zu erleichtern, bzw. zu ermöglichen, ist zur Umfangspositionierung der Felge eine gewisse Freigängikeit unabdingbar, woraus die oben beschriebenen Nachteile resultieren.

In der US-A-1,901,078 ist ein gattungsgemässes abnehmbares Rad beschrieben, bei dem ineinandergreifende Zähne auf dem Rad und der Nabe angebracht sind, wobei die Zähne durch einen elastischen Druck in Eingriff gehalten werden, der durch eine mit einem Gewinde versehenen Nabe oder eine Schraubkappe reguliert wird. Bei einer solchen Lösung wirkt ein aufgebrachtes Drehmoment durch Kraftzerlegung an den trapezförmig ausgebildeten Verzahnungen dem elastischen Vorspannmittel entgegen, wodurch bei Lastwechsel ein spielfreier, formschlüssiger Eingriff der Zähne nicht mehr gegeben ist.

Ziel der Erfindung ist, eine spielfreie, zentrische und reproduzierbare Verbindung zwischen Radaufnahme und Rad (Felge) zu schaffen, welche in Verbindung mit den Vorteilen einer zentralen Befestigung obencenannte Nachteile nicht aufweist. Die erfindungsgemäße Verbindung ist zur Übertragung hoher Drehmomente geeignet und erfüllt ein Höchstmaß an Rundlaufpräzision bei vergleichsweise geringem Fertigungsaufwand. Das Aufsetzen und Positionieren des Rades gestaltet sich äußerst einfach und unkompliziert, da das Rad durch die vorgegebene, eng abgestufte Profilierung zwangsweise in die vorgesehene Position geführt wird. Die erfindungsgemäße Verbindung läßt sich ohne wesentliche Änderungen der betroffenen Fahrwerksperipherie an gegebene Radaufnahmen und Felgenkonstruktionen anwenden.

Als drehmomentübertragendes und zentrierendes Mittel sind seitens der Radaufnahme und seitens dem Rad bzw. der Felge korrespondierende Profilierungen vorgesehen, deren Übertragungs-/Kontaktflächen die durch die zentrale Verschraubung erzeugte Vorspannkraft aufnehmen.
In vorteilhafter Weise ist die Profilierung in Form einer Plan-Kerbverzahnung, in Fachkreisen auch als "Voith-Hirth-Stirnverzahnung" geläufig, anzuwenden.

Weitere Ausgestaltungen der Erfindungen ergeben sich aus dem Anspruch 1 und den folgenden Unteransprüchen sowie der Figurenbeschreibung.

In folgenden Figuren sind beispielhaft einige Gestaltungsmöglichkeiten einer erfindungsgemäßen Verbindung zeichnerisch dargestellt.

Es zeigen:
- Fig. 1: einen Schnitt durch eine erfindungsgemäße Radaufnahme in einer ersten Ausführungsform,
- Fig. 2: eine perspektivische Detailansicht eines Verzahnungsbereiches einer erfindungsgemäßen Radaufnahme,
- Fig. 3: einen Schnitt gem. Fig. 1 einer weiteren Ausführungform,
- Fig. 4: eine weitere Verbindungsvariante gem. dem Auschnitt IV in Fig. 3 in vergrößerter Darstellung.

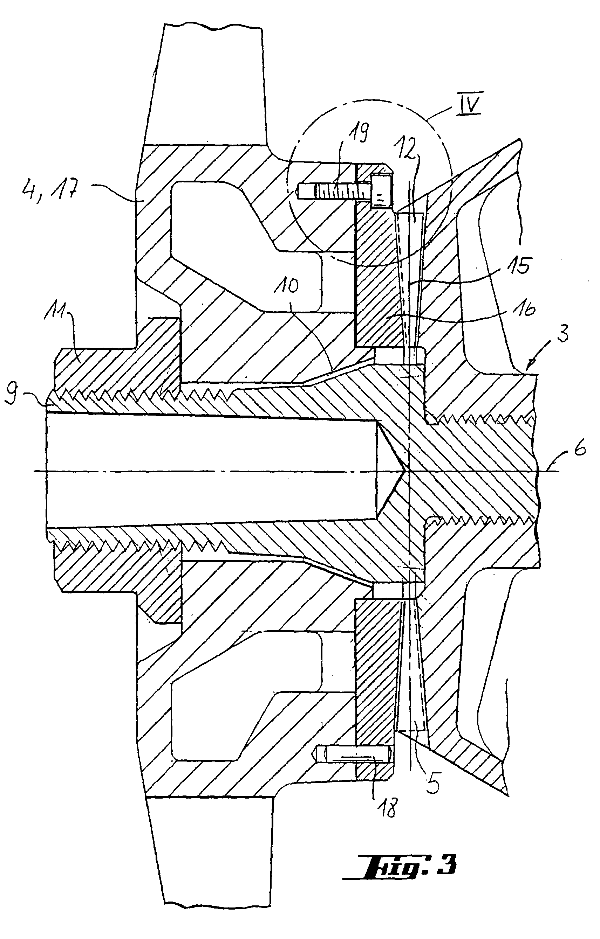

Die Zeichnungen zeigen beispielhaft erfindungsgmäße Verbindungen zwischen einem Rad und einer Radaufnahme. Als Rad wird nachfolgend der Verbund aus Felge und Reifen (Pneu) bezeichnet, wobei die Felge einteilig oder, wie dargestellt, mehrteilig ausgeführt sein kann. Als Radaufnahme wird der Teil bezeichnet, welcher im Radträger drehbar gelagert ist und einen entsprechenden Adapter zur Radbefestigung aufweist. Über die Radaufnahme werden u.a. Radlasten (symbolisch durch die Kraftpfeile F in Fig. 3 dargestellt), sowie Brems- und gegebenenfalls Antriebskräfte (symbolisch durch den Kraftpfeil M in Fig. 3 dargestellt) auf das Rad übertragen.

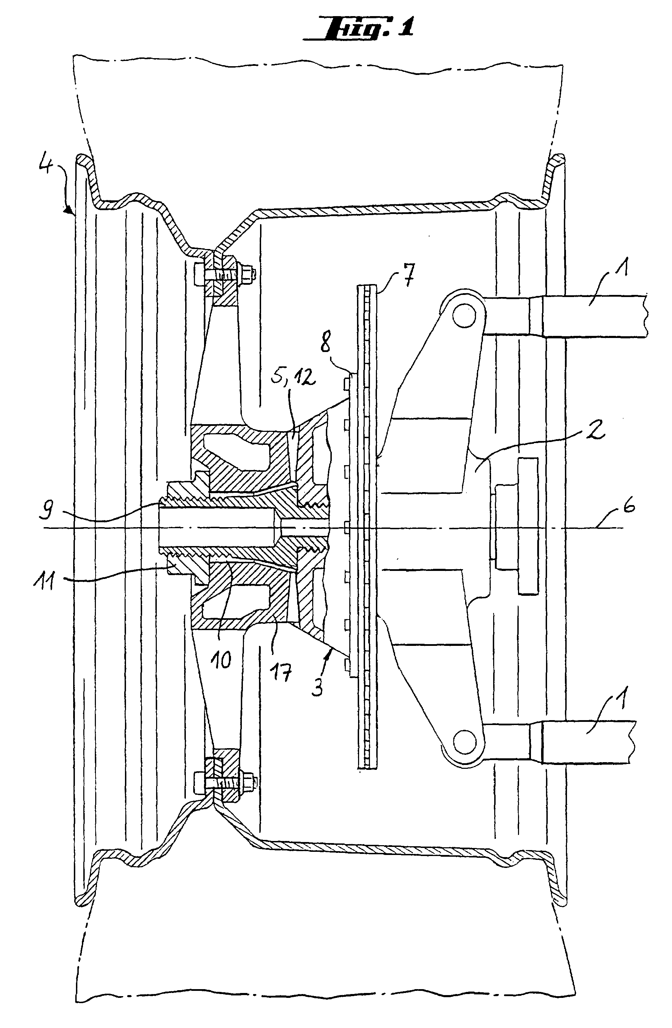

Fig. 1 zeigt schematisch einen über Lenker 1 mit einem nicht dargestellten Fahrzeugrahmen verbundenen Radträger 2, in welchen eine Radaufnahme 3 mittels geeigneter, nicht dargestellter, Wälzlager drehbar gelagert ist. Die Radaufnahme 3 ist im radseitigen Bereich radial vergrößert und weist an der dem Rad 4 zugewandten Seite beispielsweise eine Profilierung 5 in Form einer Plan-Kerbverzahnung auf, welche koaxial und zentrisch zur Drehachse 6 angeordnet ist.
Zur Befestigung einer Bremsscheibe 7 kann, wie Fig. 1 zeigt, der die Profilierung 5 tragende Bereich einen entsprechenden Flanschfortsatz 8 aufweisen. In die Radaufnahme 3 ist koaxial zur Drehachse 6 ein Radbefestigungsbolzen 9 eingebracht, welcher eine zentrale Aufnahmebohrung 10 des Rades 4 durchgreift. Das Rad 4 wird über eine auf ein endseitig auf dem Radbefestigungsbolzen 9 aufgeschraubte Mutter 11 in Richtung Radaufnahme 3 vorgespannt, derart, daß eine radseitige Profilierung 12 in die korrespondierende, radaufnahmeseitige Profilierung 5 eingreift. Das Eingreifen wird durch eine Vorzentrierung beim Aufschieben des Rades 4 auf den Befestigungsbolzen 9 begünstigt. Die Vorspannkraft des Rades 4 wird dabei vollständig über die ineinander eingreifenden Profilierungen 5, 12 in die Radaufnahme 3 eingeleitet, d.h. von den Keilflächen 13 der Profilierungen 5, 12, beispielsweise der Plan-Kerbververzahnung, aufgenommen, derart, daß durch die keilförmigen Führungs- und Stützflächen das Rad 4 zwangsweise in eine bezüglich den drei Raumkoordinaten definierte Position und bezüglich der Drehachse 6 fluchtend zur Radaufnahme 3 positioniert und fixiert wird.

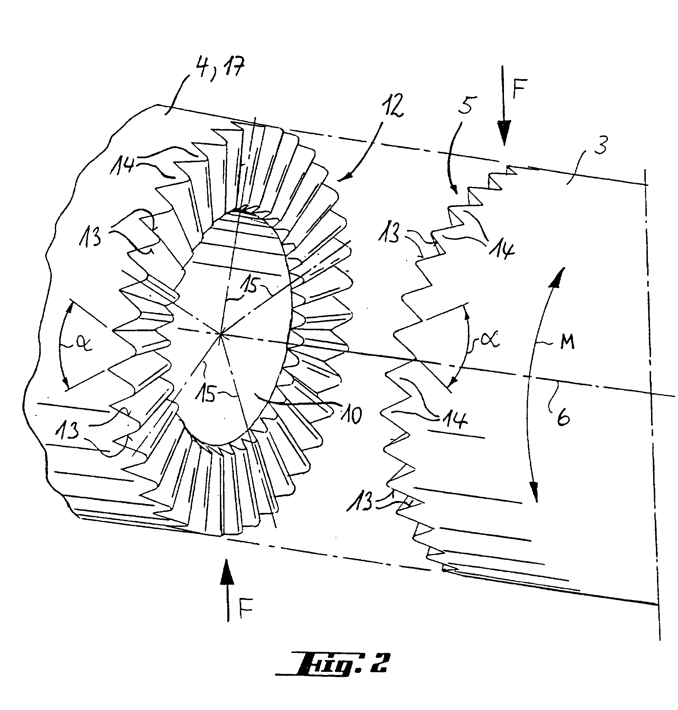

In Fig. 2 sind beispielsweise zwei korrespondierende, erfindungsgemäß zur Anwendung geeignete Plan-Kerbverzahnungen 5, 12 perspektivisch dargestellt, wobei eine dem Rad 4 und die andere der Radaufnahme 3 zugeordnet ist. Man erkennt deutlich, daß die Verzahnung durch dreieckige Profilabschnitte 14 gebildet ist, deren Längsachsen 15 sich in der Mittellinie bzw. Drehachse 6 schneiden. Der Keilwinkel α der Profilabschnitte 14 ist hierbei bezüglich der Längsachse 15 konstant. Selbstverständlich sind auch noch weitere Profilkonfigurationen denkbar, ohne den Rahmen der Erfindung zu verlassen.

Fig. 3 zeigt eine Ausführungsvariante, bei welcher die radseitige Profilierung 12 als separates Teil 16 ausgeführt ist. Diese Lösung empfiehlt sich, wenn aus Platzmangel die Fertigung der Verzahnung direkt in das Felgenmaterial oder auch in die Radaufnahme nicht oder nur erschwert möglich ist, oder der entsprechende Aufnahmewerkstoff die erforderlichen Festigkeitswerte nicht aufweist.
Das die Verzahnung tragende Teil 16 wird beispielsweise durch eine Paßstift/Schraubverbindung an der Felge 17 festgelegt, wobei die Paßstifte 18 die drehmomentbedingten Scherkräfte zwischen dem die Profilierung 12 aufweisenden Teil 16 und der Felge 17 spielfrei aufnehmen und die Schrauben 19 im wesentlichen das Teil 16 axial an der Felge 17 festlegen, sobald das axial wirkende Vorspannmittel 9, 11 gelöst wurde.

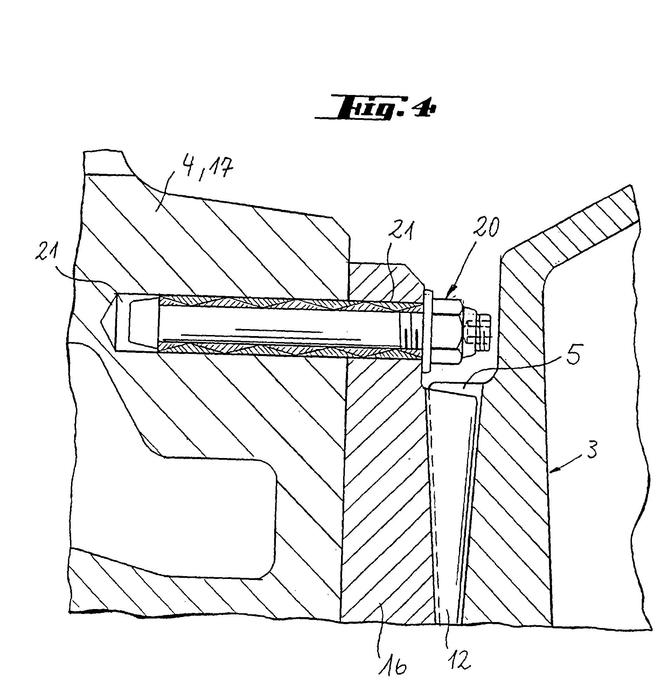

Besonders günstig kann die Verbindung gem. Fig. 4 angesehen werden. In Fig. 4 ist der die Profilierung 12 tragende Teil 16 über Bolzen mit variablem Durchmesser, sogenannte "Expandable Diameter Bolts" (z.B. Firma Shur-Lok) festgelegt. Diese Bolzen 20 - hier in der Ausführung als Blindbolzen gezeigt - werden in die fluchtenden Bohrungen 21 des die Profilierung 12 tragende Teiles 16 und der Felge 17 eingesetzt und ähnlich wie ein Spreizdübel verspannt. Der Bolzen 20 übernimmt die Eigenschaft des Paßstiftes 18 aus Fig. 3. Da die axiale Festlegung des Rades 4 im montierten Zustand von den Vorspannmittel 9, 11 erbracht wird, reicht die kraftschlüssige Verbindung durch die Blindbolzen 20 um das Teil 16 an der Felge 17 im demontierten Zustand des Rades 4 festzulegen. Wahlweise können anstelle von Blindbolzen 20 auch formschlüssig gesicherte Durchgangsbolzen mit variablen Durchmesser vorgesehen werden.

Die oben beschriebenen und in den Figuren 1 bis 4 dargestellten Ausführungsbeispiele sind nicht einschränkend auf die Erfindung zu verstehen. Weitere Gestaltungsmöglichkeiten ergeben sich aus Anspruch 1 und den danach folgenden.

### BEZUGSZEICHEN - LISTE

- 1: Lenker
- 2: Radträger
- 3: Radaufnahme
- 4: Rad
- 5: Profilierung (Radaufnahme)
- 6: Drehachse
- 7: Bremsscheibe
- 8: Flanschfortsatz
- 9: Radbefestigungsbolzen
- 10: Aufnahmebohrung
- 11: Mutter
- 12: Profilierung (Felge)
- 13: Keilfläche
- 14: Profilabschnitt
- 15: Längsachse
- 16: Verzahnungsteil
- 17: Felge
- 18: Paßstift
- 19: Schraube
- 20: Bolzen (expandabel)
- 21: Bohrung

- α: Keilwinkel (Zahnwinkel)
- F: Schubkraft
- M: Drehmoment

## Patentansprüche

1. Radbefestigung für Fahrzeuge mit einer den Reifen tragenden Felge, welche mittels axial wirkender Vorspannmittel mit einer im Radträger drehbar gelagerten, eine Radaufnahme aufweisenden Welle verbindbar ist und Mittel zur formschlüssigen Drehmoment- und Schubkraftübertragung aufweist,
**dadurch gekennzeichnet, daß**
das drehmoment- und schubkraftübertragende Mittel durch eine an der Felge (17) und Radaufnahme (3) angebrachte, formschlüssig und spielfrei in Eingriff bringbare, die Felge (17) zentrierende Profilierung (5, 12) gebildet ist,
wobei die Profilierung (5, 12) das Rad (4) unter Aufnahme der Vorspannkraft zwangsweise in eine bezüglich den drei Raumkoordinaten definierte Position und bezüglich der Drehachse (6) fluchtend zur Radaufnahme (3) positioniert und fixiert.

2. Radbefestigung nach Anspruch 1, wobei die in Eingriff bringbare Profilierung (5, 12) das einzige Mittel ist, um das Rad (4) bezüglich der Drehachse 6 zu zentrieren.

3. Radbefestigung nach Anspruch 1 oder 2, wobei sämtliche die Vorspannkraft aufnehmenden Flächen (13) der Profilierung (5, 12) formschlüssig drehmoment- und schubkraftübertragende Flächen sind und keine dieser Flächen senkrecht zur Vorspannkraftrichtung steht.

4. Radbefestigung nach Anspruch 1, 2 oder 3, wobei das drehmoment- und schubkraftübertragende Mittel der Felge (17) und der Radaufnahme (3) durch eine, ein zentrales Vorspannmittel (9, 11) koaxial umgebende, Plankerbverzahnung (5, 12) gebildet ist.

5. Radbefestigung nach Anspruch 1, 2 oder 3, wobei das drehmoment- und schubkraftübertragende Mittel (5, 12) der Felge (17) und der Radaufnahme (3) durch eine, ein zentrales Vorspannmittel (9, 11) koaxial umgebende, Gleason-Curvic-Kupplung gebildet ist.

6. Radbefestigung nach Anspruch 1, 2 oder 3, wobei das drehmoment- und schubkraftübertragende Mittel der Felge und der Radaufnahme durch eine, ein zentrales Vorspannmittel koaxial umgebende kegelförmige Innen- und Außenverzahnung gebildet ist.

7. Radbefestigung nach einem der Ansprüche 1 bis 6, wobei zumindest eine der beiden zusammenwirkenden drehmoment- und schubkraftübertragenden Profilierungen (5, 12) sich über einen Winkel von 360 Grad erstreckt.

8. Radbefestigung nach einem der Ansprüche 1 bis 7, wobei eine der beiden zusammenwirkenden Profilierungen (5, 12) nur an mehreren sektoral begrenzten Zonen ausgebildet ist.

9. Radbefestigung nach einem der Ansprüche 1 bis 8, wobei die Planverzahnungen (5, 12) direkt in den Anschlußbereich der Felge (17) und der Radaufnahme (3) eingearbeitet sind.

10. Radbefestigung nach einem der Ansprüche 1 bis 9, wobei zumindest eine der Planverzahnungen (5, 12) als separat gefertigtes Einzelteil (16) vorliegt, welches zentriert und fest mit der Felge (17) oder der Radaufnahme (3) verbindbar ist.

11. Radbefestigung nach einem der Ansprüche 1 bis 10, wobei das separat gefertigte, eine Profilierung (5, 12) aufweisende Teil (16) dem duktileren Teil zugeordnet ist.

12. Radbefestigung nach einem der Ansprüche 1 bis 11, wobei das separat gefertigte, eine Profilierung (5, 12) auweisende Teil (16) mit der Felge (17) über mechanische Führungs- und Verbindungselemente (18, 19, 20) verbunden ist.

13. Radbefestigung nach einem der Ansprüche 1 bis 12, wobei das separat gefertigte, eine Profilierung (5, 12) aufweisende Teil (16) in die Felge (17) eingegossen ist.

14. Radbefestigung nach einem der Ansprüche 1 bis 13, wobei die drehmoment- und schubkraftübertragende Profilierung (5, 12) durch einen spanlosen Fertigungsprozess direkt in die Felge (17) eingeformt ist.

## Claims

1. A wheel mount for vehicles with a wheel rim which holds the tire and can be connected by means of an axially acting prestressing means to a shaft mounted to rotate in the wheel carrier and having a wheel receptacle and which has means for transmission of the torque and shearing force in a positive-locking manner,
**characterized in that**
the torque- and shearing force-transmitting means is formed by profiling (5, 12) that is provided on the wheel rim (17) and the wheel receptacle (3) and can be engaged in a positive-locking manner without any play, centering the wheel rim (17),
wherein the profiling (5, 12) positions and secures the wheel (4) by absorbing the prestressing force by force in a regarding the three space coordinates defined position and, regarding the axis of rotation (6) in alignment with the wheel receptacle (3).

2. A wheel mounting according to Claim 1, **characterized in that** the profiling (5, 12) which is to be engaged is the only means to center the wheel rim (17) regarding the axis of rotation (6).

3. A wheel mounting according to Claim 1, **characterized in that** all the surfaces (13) of the profiling (5, 12) which take up the preload force are surfaces that transmit the torque and shear force in a positive-locking manner, and none of these surfaces is perpendicular to the direction of the preload force.

4. A wheel mounting according to Claims 1 and 2 or 3, **characterized in that** the torque- and shear force-transmitting means of the wheel rim (17) and the wheel mount (3) is formed by a crown gear (5, 12) which coaxially surrounds a central preloading means (9, 11).

5. A wheel mounting according to Claims 1 and 2 or 3, **characterized in that** the torque- and shear force-transmitting means of the wheel rim (17) and the wheel mount (3) is formed by a Gleason-Curvic type coupling coaxially surrounding a central preloading means (9, 11).

6. A wheel mounting according to Claims 1 and 2 or 3, **characterized in that** the torque- and shear force-transmitting means of the wheel rim (17) and the wheel mount (3) is formed by a conical internal and external gear coaxially surrounding a central preloading means (9, 11).

7. A wheel mounting according to Claims 1 through 6, **characterized in that** at least one of the two torque- and shear force-transmitting profilings (5, 12) that interact covers an angle of 360 degrees.

8. A wheel mounting according to Claims 1 through 7, **characterized in that** one of the two profilings (5, 12) that interact is formed only in several sectorially limited zones.

9. A wheel mounting according to Claims 1 through 8, **characterized in that** the crown gear (5, 12) is formed directly in the joining area of the wheel rim (17) and the wheel mount (3).

10. A wheel mounting according to Claims 1 through 9, **characterized in that** at least one of the crown gears (5, 12) is a separately manufactured single part (16) which is attachable in a fixed and centered manner to the wheel rim (17) or the wheel mount (3).

11. A wheel mounting according to Claims 1 through 10, **characterized in that** the separately manufactured single part (16) having a profiling (5, 12) is allocated to the more ductile part.

12. A wheel mounting according to Claims 1 through 11, **characterized in that** the separately manufactured single part (16) having a profiling (5, 12) is attached to the wheel rim (17) by mechanical guide- and connecting elements (18, 19, 20).

13. A wheel mounting according to Claims 1 through 12, **characterized in that** the separately manufactured single part (16) having a profiling (5, 12) is cast integrally with the wheel rim (17).

14. A wheel mounting according to Claims 1 through 13, **characterized in that** the torque- and shear force-transmitting profiling (5, 12) is shaped directly in the wheel rim (17) by a manufacturing process that does not involve cutting.

## Revendications

1. Montage pour roue de véhicules ayant une jante de roue qui maintient le pneu et qui peut être connectée via un moyen de précontrainte agissant axialement à un axe monté pour tourner dans le support de roue et ayant un réceptacle de roue, et qui possède un moyen de transmission du couple et de la force de cisaillement avec un effet de blocage positif,
**caractérisé en ce que**
le moyen de transmission de couple et de force de cisaillement est formé par le biais d'un profilage (5,12) prévu sur la jante de roue (17) et le réceptacle de roue (3) et **en ce qu'**il peut être attaqué avec effet de blocage positif sans aucun jeu, centrant ainsi la jante de roue (17),
le profilage (5,12) positionnant et fixant la roue (4) par absorption de la force de précontrainte dans la position définie par les trois coordonnées spatiales et selon l'axe de rotation (6) dans l'alignement du réceptacle de roue (3).

2. Montage de roue selon la revendication 1, **caractérisé en ce que** le profilage (5,12) qui doit être attaqué est le seul moyen de centrage de la jante de roue (17) par rapport à l'axe de rotation (6).

3. Montage de roue selon la revendication 1, **caractérisé en ce que** toutes les surfaces (13) du profilage (5,12) qui reçoivent la force de précontrainte sont des surfaces qui transmettent le couple et la force de cisaillement avec effet de blocage positif, et aucune de ces surfaces n'est perpendiculaire à la direction de la force de précontrainte.

4. Montage de roue selon la revendication 1 et 2 ou 3, **caractérisé en ce que** le moyen de transmission du couple et de la force de cisaillement de la jante de roue (17) et la monture de roue (3) sont formés par une couronne dentée (5,12) qui entoure coaxialement un moyen de précontrainte central (9,11).

5. Montage de roue selon la revendication 1 et 2 ou 3, **caractérisé en ce que** le moyen de transmission de couple et de force de cisaillement de la jante de roue (17) et la monture de roue (3) sont formés par un accouplement de type Gleason-Curvic entourant coaxialement un moyen de précontrainte central (9,11).

6. Montage de roue selon la revendication 1 et 2 ou 3, **caractérisé en ce que** le moyen de transmission de couple et de force de cisaillement de la jante de roue (17) et la monture de roue (3) sont formés par un pignon conique interne et externe entourant coaxialement un moyen de précontrainte central (9,11).

7. Montage de roue selon les revendications 1 à 6, **caractérisé en ce que** l'un au moins des deux profilages (5,12) de transmission de couple et de force de cisaillement qui interagissent couvre un angle de 360°.

8. Montage de roue selon les revendication 1 à 7, **caractérisé en ce que** l'un des deux profilages (5,12) qui interagissent n'est formé que dans plusieurs zones limitées sectoriellement.

9. Montage de roue selon les revendications 1 à 8, **caractérisé en ce que** la couronne dentée (5,12) est formée directement dans la zone de jonction de la jante de roue (17) et de la monture de roue (3).

10. Montage de roue selon les revendications 1 à 9, **caractérisé en ce que** l'une au moins des couronnes dentées (5,12) est une pièce unique (16) fabriquée séparément qui i est solidarisable, de façon fixe et centrée, à la jante de roue (17) ou à la monture de roue (3).

11. Montage de roue selon les revendications 1 à 10, **caractérisé en ce que** la pièce unique (16) fabriquée séparément, ayant un profilage (5,12), est attribuée à la pièce la plus ductile.

12. Montage de roue selon les revendications 1 à 11, **caractérisé en ce que** la pièce unique (16) fabriquée séparément, ayant un profilage (5,12), est fixée à la jante de roue (17) par des éléments de guidage et de connexion mécaniques (18,19,20).

13. Montage de roue selon les revendications 1 à 12, **caractérisé en ce que** la pièce unique (16) fabriquée séparément, ayant un profilage (5,12), est coulée d'un seul tenant avec la jante de roue (17).

14. Montage de roue selon les revendications 1 à 13, **caractérisé en ce que** le profilage (5,12) de transmission de couple et de force de cisaillement est conformé directement dans la jante de roue (17) par un procédé de fabrication qui n'implique pas d'usinage.
